# EUROPEAN PATENT SPECIFICATION

(11) **EP 3 335 539 B1**
(45) Date of publication and mention of the grant of the patent: **14.10.2020**
(21) Application number: 17207811.5
(22) Date of filing: 15.12.2017
(51) Int. Cl.: A01D 34/81, A01D 34/82

(54) **LAWNMOWER WITH A SAFE CUTTING DECK**
RASENMÄHER MIT SICHERHEITSSCHNEIDWERK
TONDEUSE A GAZON AVEC PLATEAU DE COUPE DE SÉCURITÉ

(30) Priority: 19.12.2016 IT 201600128278
(43) Date of publication of application: 20.06.2018
(73) Proprietor: Stiga S.p.A. in breve anche St. S.p.A., 31033 Castelfranco Veneto (TV) (IT)
(72) Inventor: CECCHETTO, Mauro, 35018 San Martino di Lupari (PD) (IT); VILLANOVA, Marco, 31020 Sernaglia della Battaglia (TV) (IT)
(74) Representative: Mittler, Andrea

(56) References cited:
- EP-A1- 3 047 719
- WO-A1-99/30551

## Description

The present invention relates to a lawnmower with a safe cutting deck.

Safe apparatuses for lawnmower cutting decks are known from the prior art, such as FR2568093 and US3971199, in which a protection grid is mounted under the cutting deck to protect the cutting blade. The protection grid comprises a circle-shaped support element, which mounts a grid consisting of mutually parallel elements. Disadvantageously, a very large cut grass residue remains inside the cutting deck, so as to prevent an effective cutting of the grass. Disadvantageously, the cutting deck must be cleaned very frequently, by frequently removing the protection grid.

US4205510A discloses a rotating box, which comprises a first multiplicity of cutting blades arranged radially from a central rotation pin and a second multiplicity of cutting blades arranged on vertical walls of the rotating box. The rotating box provides for the first multiplicity of blades to be arranged with a higher edge than the other edge which lies on the geometric cutting plane. The second multiplicity of cutting blades is arranged towards the inside of the rotating box. The rotating box is closed on the top by a co-rotating baffle lid. The rotating box is protected by a fixed box, which is fixed to the cutting deck. The fixed box comprises S-shaped slots, arranged radially from the center towards the outside and comprises openings on side walls of the fixed box. Disadvantageously, the safe apparatus is complicated to manufacture. Disadvantageously, the cut grass residue remains inside the fixed box, thus preventing the rotating box from moving and preventing a satisfactory cutting of the grass by the lawnmower. The cleaning of the rotating box and of the fixed box is disadvantageously difficult due to the complexity of the safe apparatus, and also includes a complicated disassembly of the parts. Disadvantageously, the lawnmower consumes more energy, as it needs to rotate a rotating box which mounts cutting blades therein.

EP-3047719 discloses a lawnmower comprising a protection grid fixedly mounted with a cutting deck of the lawnmower according to the preamble of claim 1.

It is the object of the present invention to provide a protection grid which ensures a greater safety of the lawnmower, a greater cutting efficiency, a much smaller accumulation of cut grass in the cutting deck, making the operation of dumping said cut grass outside the cutting deck easy and safe without needing to remove the protection grid each time.

According to the invention, such a further object is achieved by a protection grid of a lawnmower as defined in claim 1.

These and other features of the present invention will become more apparent from the following detailed description of a practical embodiment thereof, shown by way of non-limitative example in the accompanying drawings, in which:
Figure 1 shows a bottom perspective view of a protection grid which is part of the state of the art;
Figure 2 shows a top perspective view of the protection grid of Figure 1;
Figure 3 shows a plan view of the protection grid;
Figure 4 shows a section view of the protection grid along line IV-IV of figure 3.
Figure 5 shows a section view of the protection grid along line V-V of figure 3.
Figure 6 shows a bottom perspective view of an alternative protection grid, according to the present invention;
Figure 7 shows a top perspective view of the alternative protection grid in Figure 6;
Figure 8 shows a plan view of the alternative protection grid;
Figure 9 shows a section view of the protection grid along line IX-IX of figure 8.
Figure 10 shows a section view of the protection grid along line X-X in figure 8.
Figure 11 shows a top perspective view of a reinforcing disc which can be integrally mounted with the cutting deck;
Figure 12 shows a bottom perspective view of the reinforcing disc of Figure 9;
Figure 13 shows a plan view of the reinforcing disc;
Figure 14 shows a section view of the reinforcing disc taken along line XII-XII of Figure 11.

With reference to the figures listed above, it can be noted that a lawnmower comprises a cutting deck and a safety apparatus mounted with the cutting deck, said safety apparatus comprises a protection grid 7 and a reinforcing disc 6.

The cutting deck may mount any cutting blade. The cutting blade of the lawnmower is keyed to the vertical motor axis M of the lawnmower, where said vertical motor axis M identifies a rotation direction of said cutting blade with respect to a cutting deck of the lawnmower.

The protection grid 7 is mounted with the cutting deck of the lawnmower along the vertical motor axis M of the lawnmower. The protection grid 7 allows to achieve a greater safety of the lawnmower, greater cutting efficiency, a much smaller accumulation of cut grass in the cutting deck, simplifying the operation of dumping said cut grass outside the cutting deck without needing to remove the protection grid 7 each time.

Said protection grid 7 is fixedly mounted with a cutting deck of the lawnmower. Said lawnmower cutting deck comprises walls which hang downwards and form a downward-facing lower opening. Said protection grid 7 comprises a support boundary element 76 which is mounted with said lower opening of the cutting deck of the lawnmower so as to cover the entire action range of said cutting blade. Said action range of said cutting blade is identified by a complete rotation of said cutting blade.

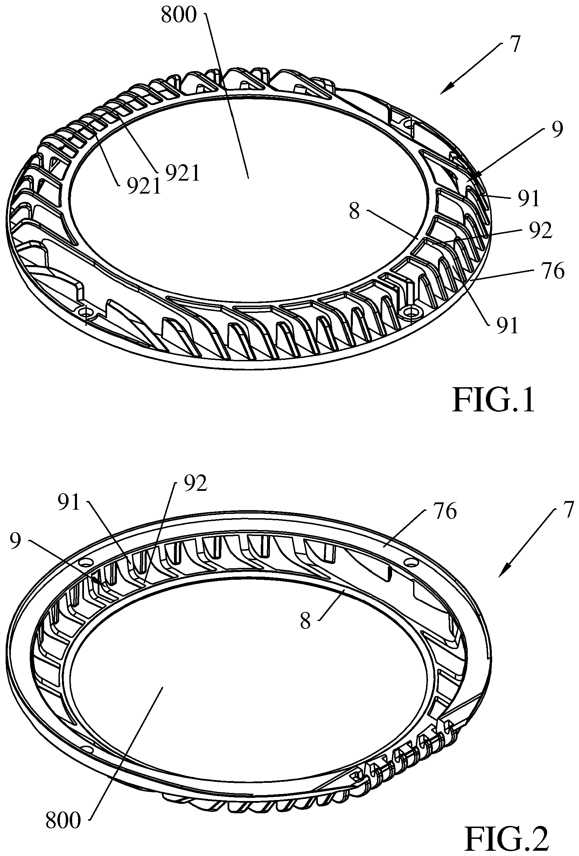

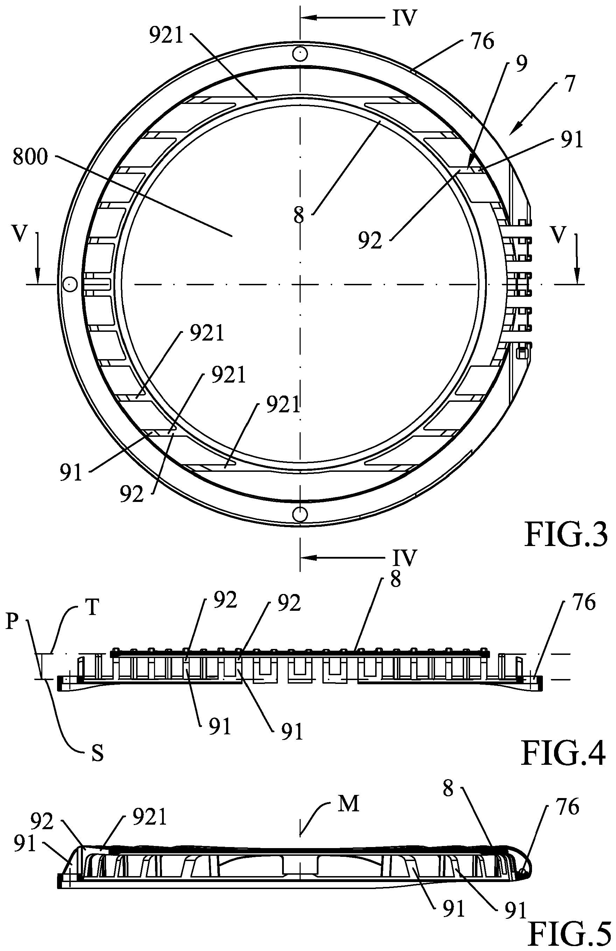

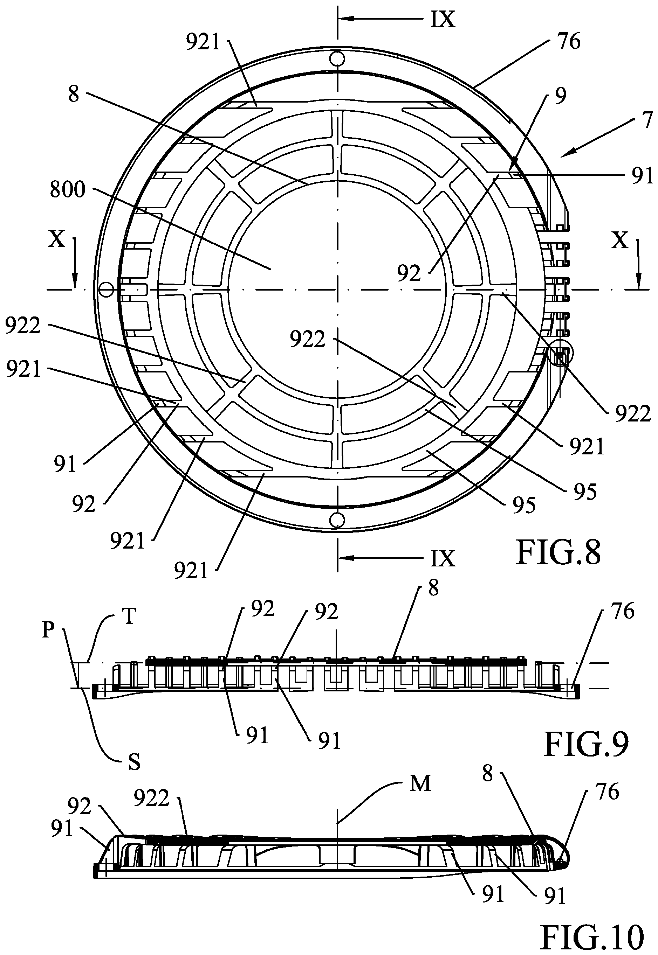

Figures 1-10 show a circular support boundary element 76. However, it is also possible for the support boundary element 76 to have different shapes according to the shape of the lower opening of the cutting deck.

Said support boundary element 76 lies on a first horizontal geometric plane S.

The edge of the lower opening of the cutting deck also lies on the first horizontal geometric plane S. Said first horizontal geometric plane S may be coherent with a horizontal geometric cutting plane identified by the rotation of the cutting blade, but it may be at a different height, according to the shape of the walls of the lawnmower cutting deck.

As particularly shown in figures 1-3 and 6-8, said protection grid 7 comprises an inner ring 8 of smaller diameter than a geometric circle identified by the action range of said cutting blade. Said inner ring 8 identifies an obstruction-free through opening 800. Said inner ring 8 lies on a second horizontal geometric plane T lower than said first horizontal geometric plane S, said second horizontal geometric plane T is parallel to said first horizontal geometric plane S, said second horizontal geometric plane T is arranged at a vertical distance P with respect to said first horizontal geometric plane S, said vertical distance P is measured along a vertical axis which is perpendicular to the ground, which is parallel to the motor axis M. In a grass cutting position said second horizontal geometric plane T is at a distance from the ground lower than the first horizontal geometric plane S.

Said protection grid 7 comprises a multiplicity of connecting means 9 between the inner ring 8 and the support boundary element 76.

Said connecting means 9 comprise at least a first portion 91 which extends from said support boundary element 76 of the protection grid 7 and said first portion 91 hangs downwards.

Said connecting means 9 of the protection grid 7 comprise at least a second portion 92, said at least a second portion 92 of said connecting elements 9 supports said inner ring 8.

Advantageously, the inner ring 8 has an obstruction-free opening 800 which allows a more efficient grass cutting, allowing to better dump the residual cut grass which may accumulate in the cutting deck without needing to remove the protection grid 7.

The opening 800 of the inner ring 8 geometrically corresponds to a central portion of the cutting blade.

The opening 800 is obstruction-free for a diameter which goes from 30% to 95% with respect to the diameter of the geometric circle identified by the range of action of said cutting blade.

The connecting means 9 of the protection grid 7 which support the inner ring 8 advantageously allow to increase the safety of the cutting deck, preventing the blade from accidentally striking a foot or the tip of a foot.

The shape of the protection grid 7 allows to have a considerable number of open spaces to better let through the residual cut grass towards the ground. Said open spaces between one connection means 9 and the other, the support boundary element 76 and the inner ring 8 allow a greater cutting efficiency of the lawnmower.

As particularly shown in figures 1-3 and 6-8, said at least a first portion 91 of connection means 9 of said protection grid 7 is a multiplicity of sectors 91 which extend from the support boundary element 76 and hang downwards to said second horizontal geometric plane T.

Said at least a second portion 92 of connecting means 9 of said protection grid 7 comprises a multiplicity of grid elements 921 and a multiplicity of radial elements 922.

Said grid elements 921 are mutually parallel to form a grid and lie on said second horizontal geometric plane T.

Said multiplicity of radial elements 922 lie on said second horizontal geometric plane T. Said multiplicity of radial elements 922 is connected on one side to at least some of said multiplicity of grid elements 921 and on the other side to said inner ring 8.

Said multiplicity of grid elements 921 is connected to at least some sectors 91 of said multiplicity of sectors 91.

Advantageously, the particular shape of the sectors and of the elements of the connecting means 9 allows a better support of the inner ring 8, a greater grass cutting efficiency, a better evacuation of the residual cut grass in the cutting deck without removing the protection grid 7 each time, thus increasing safety not only during the grass cutting step but also increasing safety during the step of cleaning the residual cut grass from the cutting deck.

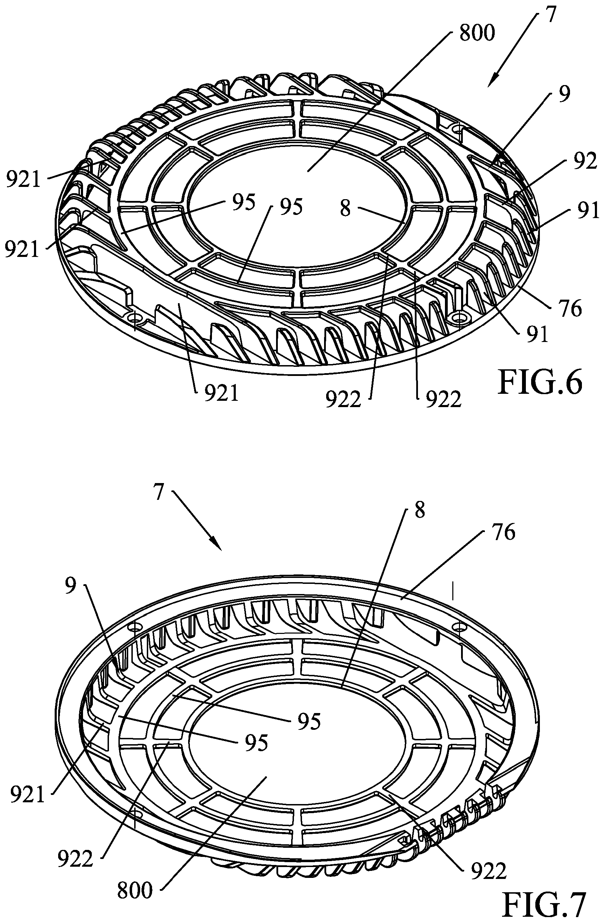

As particularly shown in the figures 6-8, an alternative protection grid 7 comprises at least one inner reinforcing ring 95. Figures 6-8 show two inner reinforcing rings 95. Each inner reinforcing ring 95 is concentric with said inner ring 8. Each inner reinforcing ring 95 is mounted with each radial element 922 of said multiplicity of radial elements 922. In particular, two inner reinforcing rings 95 are shown in figures 6-8. A first outermost reinforcing ring 95 is mounted with grid elements 921 and with radial elements 922. While a second innermost reinforcing ring 95 is mounted with radial elements 922.

Advantageously, the presence of residual cut grass is decreased and the cutting efficiency and safety to the lawnmower are increased during the cutting step and the cleaning step.

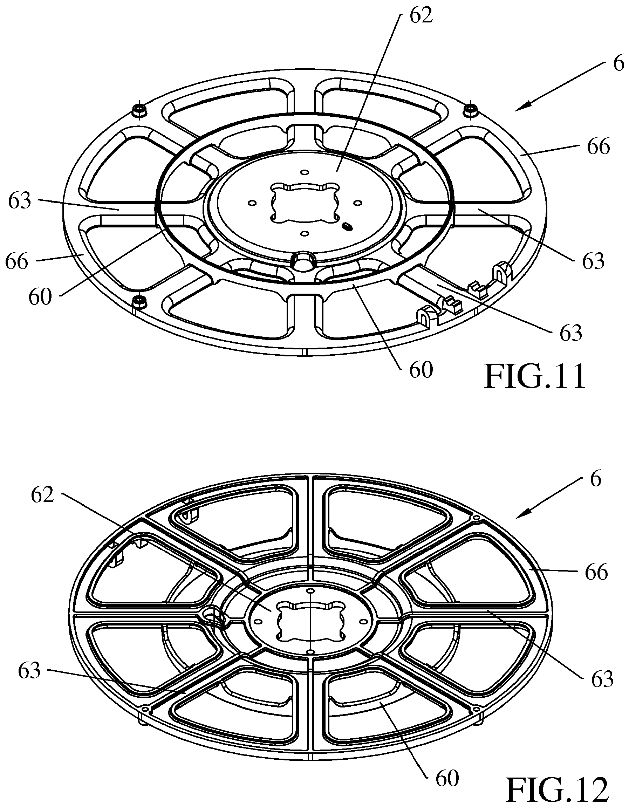

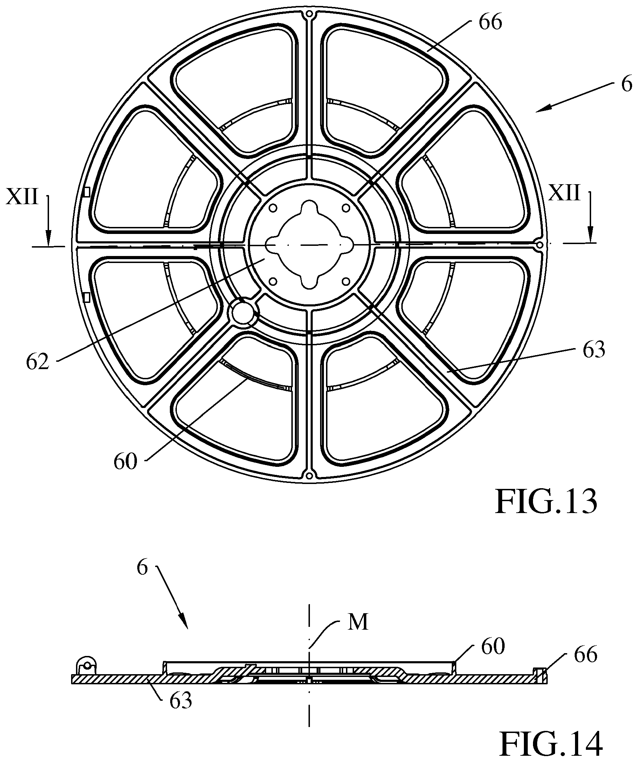

Figures 11-14 show a reinforcing disc 6, which is integrally mounted with the cutting deck and positioned above said cutting blade so that at least the central portion of the cutting blade is arranged underneath at a central portion 62 of said reinforcing disc 6. The reinforcing disc 6 and the protection grid 7 enclose the cutting blade. Said reinforcing disc 6 comprises said flat disc-shaped central portion 62. A multiplicity of radial reinforcing sectors 63 of the reinforcing disc 6 extends radially from said central portion 62 of the reinforcing disc 6. Said reinforcing disc 6 comprises an outer reinforcing ring 66 which is mounted at the ends of the radial reinforcing sectors 63. Said reinforcing disc 6 comprises at least one inner reinforcing ring 60.

Advantageously, said reinforcing disc 6 allows to make the cutting deck on which the cutting blade and the protection grid 7 are mounted even more solid and robust, thus increasing the safety of the lawnmower and its resistance to deformations, the robustness in case of accidental collisions with stones and other cut grass residues. Said reinforcing disc 6 has a multiplicity of empty spaces between the radial reinforcing sectors 63 and the reinforcing rings 60, 66 which allow to reduce the weight of the cutting deck of the lawnmower.

With regard to the operation of the lawnmower with safety cutting deck, the protection grid 7 protects the user from the action of the cutting blade. Any cutting blade cuts the grass even more effectively and efficiently because much less residual cut grass remains in the cutting deck by virtue of the protection grid 7 according to the present invention.

With regard to cleaning the safety cutting deck, it is not necessary to remove the protection grid 7 each time to clean the cutting deck because much less residual cut grass remains in the cutting deck. Furthermore, said residual cut grass is evacuated from the cutting deck through the several openings due to the light geometric shape of the protection grid 7. In particular, most of the residual cut grass is evacuated through the opening 800 of the inner ring of the protection grid 7, which is obstruction-free. The obstruction-free through opening 800 allows an even greater dumping of the residual cut grass from the cutting deck.

Alternatively, different shapes of protection grids 7 are possible, where said at least a first portion 91 of connecting means 9 of said protection grid 7 is a multiplicity of sectors 91 which extend from the support boundary element 76 and hang downwards to said second horizontal geometric plane T. Said at least a second portion 92 of connecting means 9 of said protection grid 7 is a multiplicity of grid elements 921, which are mutually parallel and lie on said second horizontal geometric plane T. Said multiplicity of grid elements 921 is connected on a side to at least some sectors 91 of said multiplicity of sectors 91 and on the other side to said inner ring 8.

Alternatively, a yet alternative protection grid 7 can be provided, where at least a first portion 91 of connecting means 9 of said protection grid 7 is a multiplicity of sectors 91 which extend from the support boundary element 76 and hang downwards to said second horizontal geometric plane T. Said at least a second portion 92 of connecting means 9 of said protection grid 7 is a multiplicity of radial elements 922, which lie on said second horizontal geometric plane T. Said multiplicity of radial elements 922 is connected on a side to at least some sectors 91 of said multiplicity of sectors 91 and on the other side to said inner ring 8.

Advantageously, the protection grid according to the present invention ensures a greater safety of the lawnmower, a greater cutting efficiency, a much smaller accumulation of cut grass in the cutting deck, thus making the operation of dumping said cut grass outside the cutting deck easy and safe without needing to remove the protection grid each time, thus making the lawnmower more solid, more robust and safer.

Advantageously, the lawnmower with a safety cutting deck comprising a cutting deck and a safety apparatus mounted with the cutting deck and a protection grid 7, which is fixedly mounted with the cutting deck and covers the entire action range of said cutting blade, comprising a multiplicity of connecting means 9 between a support boundary element 76 and an inner ring 8 with an obstruction-free through opening 800 according to the present invention, increases the safety for a user who uses the lawnmower, increases the cutting efficiency, reduces the energy consumption, allows to obtain a much smaller accumulation of cut grass in the cutting deck, thus making the cleaning operations simpler and safer, the lawnmower being more robust and safer.

## Claims

1. A lawnmower comprising a protection grid (7) fixedly mounted with a cutting deck of the lawnmower, said cutting deck of the lawnmower comprises walls which hang downwards and form a downward-facing lower opening,
said protection grid (7) comprises a support boundary element (76) which is mounted with said lower opening of the cutting deck of the lawnmower so as to cover the entire action range of a cutting blade of the lawnmower, said action range of said cutting blade is identified by a complete rotation of said cutting blade,
said support boundary element (76) lies on a first horizontal geometric plane (S), said protection grid (7) comprises a multiplicity of connection means (9), said connection means (9) comprise at least a first portion (91) which extends from said support boundary element (76) of the protection grid (7), said first portion (91) hangs downwards,
said protection grid (7) comprises an inner ring (8) of smaller diameter than a geometric circle identified by the action range of said cutting blade, said inner ring (8) identifies an obstruction-free through opening (800), said through opening (800) is obstruction-free for a diameter between 30% and 95% with respect to the diameter of the geometric circle identified by the action range of said cutting blade,
said inner ring (8) lies on a second horizontal geometric plane (T) lower than said first horizontal geometric plane (S), said second horizontal geometric plane (T) is parallel to said first horizontal geometric plane (S), said second horizontal geometric plane (T) is arranged at a vertical distance (P) with respect to said first horizontal geometric plane (S), said vertical distance (P) is measured along a vertical axis which is perpendicular to the ground, in a grass cutting position said second horizontal geometric plane (T) is at a distance from the ground lower than the first horizontal geometric plane (S),
said connecting means (9) of the protection grid (7) comprise at least a second portion (92), said at least a second portion (92) of said connecting elements (9) supports said inner ring (8),
said at least a first portion (91) of connecting means (9) of said protection grid (7) is a multiplicity of sectors (91) which extend from the support boundary element (76) and hang downwards to said second horizontal geometric plane (T), said at least a second portion (92) of connecting means (9) of said protection grid (7) comprises a multiplicity of radial elements (922), which lie on said second horizontal geometric plane (T), said multiplicity of radial elements (922) is connected on one side to at least some sectors (91) of said multiplicity of sectors (91) and on the other side to said inner ring (8),
**characterized by** comprising at least one inner reinforcing ring (95), said inner reinforcing ring (95) is concentric with said inner ring (8), said inner reinforcing ring (95) is mounted with each radial element (922) of said multiplicity of radial elements (922).

2. A lawnmower according to claim 1, **characterized in that** said at least a second portion (92) of connecting means (9) of said protection grid (7) comprise a multiplicity of grid elements (921) which are mutually parallel and lie on said second horizontal geometric plane (T), said multiplicity of grid elements (921) is connected on one side to at least some sectors (91) of said multiplicity of sectors (91) and on the other side to said inner ring (8).

3. A lawnmower according to any one of the claims 1-2, **characterized in that** it mounts a reinforcing disc (6), said reinforcing disc (6) and the protection grid (7) enclose the cutting blade, wherein said reinforcing disc (6) is integrally mounted with the cutting deck and is positioned above said cutting blade so that at least the central portion of the cutting blade is arranged underneath at a central portion (62) of said reinforcing disc (6), said reinforcing disc (6) comprises said flat disc-shaped central portion (62), a multiplicity of reinforcing radial sectors (63) of the reinforcing disc (6) radially extends from said central portion (62) of the reinforcing disc (6), said reinforcing disc (6) comprises an outer reinforcing ring (66) which is mounted at the ends of the reinforcing radial sectors (63), said reinforcing disc (6) comprises at least one inner reinforcing ring (60).

## Patentansprüche

1. Rasenmäher mit einem Schutzgitter (7), das an einem Mähwerk des Rasenmähers fest angebracht ist, wobei das Mähwerk des Rasenmähers Wände aufweist, die nach unten hängend angeordnet sind und eine nach unten gerichtete untere Öffnung bilden,
wobei das Schutzgitter (7) ein Abstützbegrenzungselement (76) aufweist, das an der unteren Öffnung des Mähwerks des Rasenmähers derart angebracht ist, dass es den gesamten Aktionsbereich eines Schneidmessers des Rasenmähers abdeckt, wobei der Aktionsbereich des Schneidmessers durch eine vollständige Umdrehung des Schneidmessers definiert ist,
wobei das Abstützbegrenzungselement (76) auf einer ersten horizontalen geometrischen Ebene (S) liegt, wobei das Schutzgitter (7) eine Vielzahl von Verbindungseinrichtungen (9) aufweist, wobei die Verbindungseinrichtungen (9) mindestens einen ersten Bereich (91) aufweisen, der sich von dem Abstützbegrenzungselement (76) des Schutzgitters (7) weg erstreckt, wobei der erste Bereich (91) nach unten hängend angeordnet ist,
wobei das Schutzgitter (7) einen Innenring (8) mit kleinerem Durchmesser als ein geometrischer Kreis aufweist, der durch den Aktionsbereich des Schneidmessers definiert ist, wobei der Innenring (8) eine hindernisfreie Durchgangsöffnung (800) bildet, wobei die Durchgangsöffnung (800) für einen Durchmesser zwischen 30% und 95% in Bezug auf den Durchmesser des geometrischen Kreises hindernisfrei ist, der durch den Aktionsbereich des Schneidmessers definiert ist,
wobei der Innenring (8) auf einer zweiten horizontalen geometrischen Ebene (T) liegt, die tiefer als die erste horizontale geometrische Ebene (S) liegt, wobei die zweite horizontale geometrische Ebene (T) zu der ersten horizontalen geometrischen Ebene (S) parallel ist, wobei die zweite horizontale geometrische Ebene (T) in einem vertikalen Abstand (P) in Bezug auf die erste horizontale geometrische Ebene (S) angeordnet ist, wobei der vertikale Abstand (P) entlang einer vertikalen Achse gemessen wird, die rechtwinklig zum Boden ist, wobei in einer Grasschneideposition die zweite horizontale geometrische Ebene (T) in einem Abstand vom Boden angeordnet ist, der tiefer liegt als die erste horizontale Ebene (S),
wobei die Verbindungseinrichtungen (9) des Schutzgitters (7) mindestens einen zweiten Bereich (92) aufweisen, wobei der mindestens eine zweite Bereich (92) der Verbindungseinrichtungen (9) den Innenring (8) abstützt,
wobei mindestens der erste Bereich (91) der Verbindungseinrichtungen (9) des Schutzgitters (7) in einer Vielzahl von Sektoren (91) vorliegt, die sich von dem Abstützbegrenzungselement (76) weg erstrecken und zu der zweiten horizontalen geometrischen Ebene (T) nach unten hängend angeordnet sind, wobei der mindestens zweite Bereich (92) der Verbindungseinrichtungen (9) des Schutzgitters (7) eine Vielzahl von radialen Elementen (922) aufweist, die auf der zweiten horizontalen geometrischen Ebene (T) liegen, wobei die Vielzahl von radialen Elementen (922) auf der einen Seite mit mindestens einigen Sektoren (91) der Vielzahl von Sektoren (91) verbunden ist und auf der anderen Seite mit dem Innenring (8) verbunden ist,
**dadurch gekennzeichnet, dass** er mindestens einen inneren Verstärkungsring (95) aufweist, wobei der innere Verstärkungsring (95) konzentrisch zu dem Innenring (8) ist, wobei der innere Verstärkungsring (95) an jedem radialen Element (922) der Vielzahl von radialen Elementen (922) angebracht ist.

2. Rasenmäher nach Anspruch 1,
**dadurch gekennzeichnet, dass** der mindestens eine zweite Bereich (92) der Verbindungseinrichtungen (9) des Schutzgitters (7) eine Vielzahl von Gitterelementen (921) aufweist, die zueinander parallel sind und auf der zweiten horizontalen geometrischen Ebene (T) liegen, wobei die Vielzahl von Gitterelementen (921) auf der einen Seite mit mindestens einigen Sektoren (91) der Vielzahl von Sektoren (91) verbunden ist und auf der anderen Seite mit dem Innenring (8) verbunden ist.

3. Rasenmäher nach einem der Ansprüche 1 bis 2,
**dadurch gekennzeichnet, dass** eine Verstärkungsscheibe (6) angebracht ist, wobei die Verstärkungsscheibe (6) und das Schutzgitter (7) das Schneidmesser umschließen, wobei die Verstärkungsscheibe (6) in integraler Weise an dem Mähwerk angebracht ist und über dem Schneidmesser positioniert ist, so dass mindestens der zentrale Bereich des Schneidmessers unter einem zentralen Bereich (62) der Verstärkungsscheibe (6) angeordnet ist, wobei die Verstärkungsscheibe (6) den flachen scheibenförmigen zentralen Bereich (62) aufweist, wobei sich eine Vielzahl von radialen Verstärkungssektoren (63) der Verstärkungsscheibe (6) radial von dem zentralen Bereich (62) der Verstärkungsscheibe (6) weg erstreckt, wobei die Verstärkungsscheibe (6) einen äußeren Verstärkungsring (66) aufweist, der an den Enden der radialen Verstärkungssektoren (63) angebracht ist, wobei die Verstärkungsscheibe (6) mindestens einen inneren Verstärkungsring (60) aufweist.

## Revendications

1. Tondeuse à gazon comprenant une grille de protection (7) montée de manière fixe avec un plateau de coupe de la tondeuse à gazon, ledit plateau de coupe de la tondeuse à gazon comprend des parois qui sont suspendues vers le bas et forment une ouverture inférieure orientée vers le bas,
ladite grille de protection (7) comprend un élément de limite de support (76) qui est monté avec ladite ouverture inférieure du plateau de coupe de la tondeuse à gazon afin de recouvrir toute la plage d'action d'une lame de coupe de la tondeuse à gazon, ladite plage d'action de ladite lame de coupe est identifiée par une rotation complète de ladite lame de coupe,
ledit élément de limite de support (76) est sur un premier plan géométrique horizontal (S), ladite grille de protection (7) comprend une pluralité de moyens de raccordement (9), lesdits moyens de raccordement (9) comprennent au moins une première partie (91) qui s'étend à partir dudit élément de limite de support (76) de la grille de protection (7), ladite première partie (91) est suspendue vers le bas,
ladite grille de protection (7) comprend une bague interne (8) de plus petit diamètre qu'un cercle géométrique identifié par la plage d'action de ladite lame de coupe, ladite bague interne (8) identifie une ouverture débouchante dépourvue d'obturation (800), ladite ouverture débouchante (800) est dépourvue d'obturation pour un diamètre compris entre 30% et 95% par rapport au diamètre du cercle géométrique identifié par la plage d'action de ladite lame de coupe,
ladite bague interne (8) est sur un second plan géométrique horizontal (T) inférieur audit premier plan géométrique horizontal (S), ledit second plan géométrique horizontal (T) est parallèle audit premier plan géométrique horizontal (S), ledit second plan géométrique horizontal (T) est agencé à une distance verticale (P) par rapport audit premier plan géométrique horizontal (S), ladite distance verticale (P) est mesurée le long d'un axe vertical qui est perpendiculaire au sol, dans une position de coupe d'herbe, ledit second plan géométrique horizontal (T) est à une distance du sol inférieure au premier plan géométrique horizontal (S),
lesdits moyens de raccordement (9) de la grille de protection (7) comprennent au moins une seconde partie (92), ladite au moins une seconde partie (92) desdits éléments de raccordement (9) supporte ladite bague interne (8),
ladite au moins une première partie (91) des moyens de raccordement (9) de ladite grille de protection (7) est une pluralité de secteurs (91) qui s'étendent à partir de l'élément de limite de support (76) et est suspendue vers le bas audit second plan géométrique horizontal (T), ladite au moins une seconde partie (92) des moyens de raccordement (9) de ladite grille de protection (7) comprend une pluralité d'éléments radiaux (922) qui sont sur ledit second plan géométrique horizontal (T), ladite pluralité d'éléments radiaux (922) est raccordée d'un côté, à au moins certains secteurs (91) de ladite pluralité de secteurs (91) et de l'autre côté, à ladite bague interne (8),
**caractérisée en ce qu'**elle comprend au moins une bague de renforcement interne (95), ladite bague de renforcement interne (95) est concentrique avec ladite bague interne (8), ladite bague de renforcement interne (95) est montée avec chaque élément radial (922) de ladite pluralité d'éléments radiaux (922).

2. Tondeuse à gazon selon la revendication 1, **caractérisée en ce que** ladite au moins une seconde partie (92) des moyens de raccordement (9) de ladite grille de protection (7) comprend une pluralité d'éléments de grille (921) qui sont mutuellement parallèles et sont dans ledit second plan géométrique horizontal (T), ladite pluralité d'éléments de grille (921) est raccordée d'un côté à au moins certains secteurs (91) de ladite pluralité de secteurs (91) et de l'autre côté, à ladite bague interne (8).

3. Tondeuse à gazon selon l'une quelconque des revendications 1 à 2, **caractérisée en ce qu'**elle est montée avec un disque de renforcement (6), ledit disque de renforcement (6) et la grille de protection (7) entourent la lame de coupe, dans laquelle ledit disque de renforcement (6) est monté, de manière solidaire, avec le plateau de coupe et est positionné au-dessus de ladite lame de coupe de sorte qu'au moins la partie centrale de la lame de coupe est agencée au-dessous d'une partie centrale (62) dudit disque de renforcement (6), ledit disque de renforcement (6) comprend ladite partie centrale en forme de disque plat (62), une pluralité de secteurs radiaux de renforcement (63) du disque de renforcement (6) s'étend radialement à partir de ladite partie centrale (62) du disque de renforcement (6), ledit disque de renforcement (6) comprend une bague de renforcement externe (66) qui est montée au niveau des extrémités des secteurs radiaux de renforcement (63), ledit disque de renforcement (6) comprend au moins une bague de renforcement interne (60).
